# DEMANDE DE BREVET EUROPEEN

(11) **EP 0 718 785 A1**
(43) Date de publication de la demande: **26.06.1996**
(21) Numéro de dépôt: 95420363.4
(22) Date de dépôt: 19.12.1995
(51) Int. Cl.: G06F 17/30

(54) **Procédé de stockage et de classement de données sur un disque optique compact à mémoire fixe**

(30) Priorité: 23.12.1994 FR 9415814
(71) Demandeur: AMITEL, 69100 Villeurbanne (FR)
(72) Inventeur: Dubie, Jean-Marc, F-69100 Villeurbanne (FR)
(74) Mandataire: Vuillermoz, Bruno

(57) **Abrégé**

Ce procédé de stockage et de classement de données numérisées consiste :
- tout d'abord à identifier, sous la forme d'un numéro, le fichier primaire correspondant à une donnée ou à une série de données à stocker, ledit numéro étant susceptible de représenter plusieurs informations relatives à la même donnée ou à la même série de données ;
- puis à soumettre ledit numéro d'identification du fichier primaire à un changement de base, de telle sorte à obtenir un code en deux parties constituant l'identification du fichier de stockage sur le disque compact; le nom du répertoire du disque compact dans lequel est stocké ledit fichier de stockage étant composé de un à huit caractères alphanumériques sélectionnés dans le numéro d'identification du fichier primaire ou du fichier de stockage selon un position fixe et prédéterminée au sein du dudit numéro, le nombre desdits caractères étant prédéterminé pour un type de stockage et de classement donnés.

## Description

L'invention concerne un nouveau procédé de stockage de classement de données et d'informations de toutes natures, notamment mais non limitativement dans un but d'archivage interactif.

En d'autres termes, l'objet de l'invention est de proposer un procédé de classement et d'archivage optimisé tant en termes d'encombrement, que de gain de temps dans la recherche desdits documents archivés.

De tout temps, les problèmes liés à l'archivage de données de toutes natures, techniques, comptables, fiscales, commerciales etc... ont préoccupé les services concernés. Qui plus est, des obligations légales ou réglementaires imposent la conservation d'un certain nombre d'informations et de données pendant une durée supérieure à 40 ans.

Jusqu'à présent, le seul archivage possible résidait dans "l'archivage papier", notamment en armoires, en colonnes, en système rotatif, dont les inconvénients sont bien connus, et qui s'avèrent aujourd'hui relativement rédhibitoires notamment en termes d'encombrement et de poids. Outre ces inconvénients majeurs, il convient également de citer l'unicité du document archivé ne permettant qu'un acces unique et privant les autres utilisateurs potentiels d'une telle utilisation. Enfin, un tel archivage papier est susceptible de destruction, notamment par incendie, annihilant de manière définitive toute trace de l'information archivée.

On a alors proposé un archivage sur microfilms. Si certes on aboutit par ce moyen à un gain de place, l'accès à l'information reste toujours unique et le temps mis en oeuvre pour cet accès, malgré la robotisation développée pour réduire le temps d'accès, est relativement long, puisque le principe de fonctionnement des microfilms réside dans le défilement séquentiel de l'information, nécessitant le défilement d'un certain nombre d'informations avant d'aboutir a l'information recherchée. Par ailleurs, le support microfilm est fragile et s'use un peu à chaque utilisation, entrainant une dégradation de l'image restituée (rayures), et donc à terme, une annihilation de l'information.

On a également proposé comme support de stockage des microfiches. Ce principe d'archivage présente l'avantage par rapport au système précédent d'un accès plus rapide à l'information (déplacement réduit de la microfiche face à l'objectif de la prise de vue). Si en outre, l'usure du support est moindre, le coût d'archivage proprement dit d'une part, et de consultation d'autre part, est tout particulièrement élevé et en tout cas incompatible avec un grand nombre d'applications ou d'utilisateurs, et il n'existe pas de robotisation efficace pour la consultation des microfiches. Un tel système est également à accès unique avec l'inconvénient que cela comporte, et présente tout comme dans les cas précédents un risque de destruction (support fragile).

Un réel progrès par rapport à ce mode de stockage a consisté à produire des disques magnéto-optiques, c'est à dire à stocker les données de manière effaçable et modifiable sur un disque magnétique. Outre la bonne fiabilité d'un tel système de stockage, celui-ci permet également l'exploitabilité des données informatiques et une réduction importante de l'encombrement. Cependant, un tel système de stockage est d'un coût élevé et en outre n'est pas normalisé, de sorte qu'il existe une grande disparité de matériels, incompatible avec une diffusion de l'information dès lors que l'on souhaite l'interchangeabilité du matériel. Par ailleurs, de par le caractère modifiable des données inscrites sur le disque magnétique, ce mode de stockage ne peut pas servir de preuve légale, notamment pour tout ce qui concerne les pièces de comptabilité, l'archivage de factures, bilans, etc...

Il est alors apparu récemment un principe d'archivage dont le support est constitué par des disques compacts optiques à mémoire fixe, communément appelés selon l'expression en langue anglaise CD-WORM (write once read memory-inscriptible une seule fois sans limitation de relecture), qui constituent après écriture un média normalisé de type CD-ROM, c'est à dire que le même format est utilisé par tous les constructeurs, permettant ainsi une exploitation par tout système compatible avec la dite norme.

De manière connue, les informations sont stockées sur un disque en polycarbonate ou en verre par un procédé ablatif, c'est à dire par destruction partielle du support au moyen notamment d'une source laser, créant un certain nombre d'orifices, dont la séquence est "lue" par la déviation d'un rayon laser dans un lecteur de disques CD-ROM standard, et susceptible ainsi de restituer de manière lisible l'information correspondante. Ce procédé ablatif confère donc une grande fiabilité à l'information stockée, qui devient non modifiable, et qui est donc susceptible de servir de fondement de preuves légales. De tels supports présentent une grande longévité dans le temps, typiquement voisine de 100 ans, et de par son essor, la technologie y relative devient grand public, abaissant de manière drastique les coûts correspondants, tant d'archivage proprement dit que d'accès à l'information ainsi archivée.

Incontestablement, ce mode de stockage constitue un grand progrès par rapport au mode précédemment utilisé. Cependant, l'organisation du stockage des données sur un CD-ROM est le plus souvent organisée sous forme séquentielle, augmentant de fait la durée d'interaction entre l'utilisateur et le système de recherche d'un document spécifique, puisque ledit système fait appel à un fichier index, dans lequel sont répertoriés la liste des différents documents stockés sur le CD-ROM, ainsi que le chemin d'accès aux fichiers contenant le document. Il est donc nécessaire pour accéder à un document de procéder aux étapes suivantes :
A : Lecture du fichier index (séquentiel ou aléatoire) pour retrouver le chemin d'accès et le nom du fichier contenant le document à consulter.
B : Lecture du fichier contenant le document.

Ces deux opérations entrainent deux opérations de lecture sur le CD-ROM, elles mêmes constituées d'opérations internes de recherche d'index suivi de la recherche des données.

Le CD-ROM est un média orienté défilement séquentiel de l'information entrainant un temps d'accès plus long que sur disque magnétique.

L'objet de l'invention concerne justement un procédé de stockage et de classement de données sur un tel disqe optique compact à mémoire fixe destiné à permettre la recherche de n'importe quel fichier sans le concours d'un fichier index, permettant ainsi d'une part, de gagner du temps dans le cadre de l'interactivité du système d'archivage, et d'autre part, d'augmenter l'interactivité du système sans avoir à mettre en oeuvre une procédure de réindexation puisque le disque compact est alors auto-suffisant pour s'exploiter lui-même.

Ce procédé de stockage et de classement de données sur un disque optique compact à mémoire fixe dans lequel lesdites données sont stockées par gravage des disques optiques se caractérise en ce qu'il consiste :
- tout d'abord à identifier, sous la forme d'un nombre A, le fichier primaire correspondant à une donnée ou à une série de données à stocker, ledit nombre A étant susceptible de représenter plusieurs informations relatives à la même donnée ou à la même série de données (exemple: documents de plusieurs pages).
- puis à identifier sous la forme d'un nombre B d'au plus 3 caractères, le fichier dans lequel se trouve l'information recherchée ;
- et enfin à soumettre ledit nombre A identifiant le fichier primaire à un changement de base, de telle sorte à obtenir un code constituant la première partie du fichier de stockage sur le disque compact, la seconde partie généralement située après le signe point étant constituée par ledit nombre B,
le nom du répertoire du disque compact dans lequel est stocké ledit fichier de stockage étant composé de un à huit caratères alphanumériques sélectionnés dans le nombre A d'identification du fichier primaire ou dans le nombre représentatif du fichier de stockage, selon une position fixe et prédéterminée au sein dudit nombre, le nombre desdits caractères étant prédéterminé pour un type de stockage et de classement.

Avantageusement, le changement de base s'effectue de la base décimale dans lequel est exprimé le nombre A en une chaine alphanumérique exprimée dans une base supérieure à dix pouvant aller jusqu'à 36 ou 37 pour utiliser tous les jeux de caractères disponibles dans le jeu de codification des noms de fichiers respectant la norme ISO 9660.

En résumé, le nom du fichier d'une page d'un document est constitué :
- d'une première partie identifiant la donnée ou la série de données sous la forme d'un mot alphanumérique ;
- d'une seconde partie d'au plus trois caractères numériques, séparée de la première par un point ou équivalent, et représentative d'une séquence d'information dans la donnée ou la série de données.

Le nombre de caractères sélectionnés pour constituer le nom du répertoire et la position du premier caractère dans la chaîne de caractères composant le nom du fichier primaire ou le nom du fichier de stockage (communément dénommé par l'expression en langue anglaise "offset") sont des conventions du réalisateur réglées en fonction du nombre de fichiers que contiendra le média CD-ROM.

Le réalisateur du CD ROM dispose également d'une possibilité de cryptage optionnel de l'accès à l'information ainsi que de l'algorithme optionnel de décryptage. Le nombre de caractères sélectionné et l'offset du premier caractère sont connus du programme de consultation du CD-ROM.

Cette méthodologie permet de se passer d'un fichier index car le nombre A identifiant le fichier primaire est porteur de l'identification de l'information à retrouver et du chemin d'accès à cette information.

En d'autres termes, l'invention consiste d'une part, à stocker n'importe quel numéro d'identification d'une donnée ou d'une série de données à archiver sous la forme d'une chaîne de caractères compatible avec la norme ISO 9660 niveau 1, de telle sorte à permettre l'utilisation du mode de stockage avec n'importe quel appareil ou matériel de lecture de disque compact optique, et d'autre part et surtout, à permettre d'identifier au sein du disque compact la donnée ou la série de données sous une forme telle que le nom du répertoire permet au système de lecture d'accéder directement à l'information sans passer par voie séquentielle, c'est-à-dire sans passer par l'intermédiaire d'un fichier index.

En outre, le procédé peut comporter une étape supplémentaire de cryptage associé à l'étape de changement de base, les caractères constitutifs du nom du répertoire étant alors choisis au niveau du nombre A, puis cryptés au moyen d'un algorithme.

De la sorte, l'accès à l'information ainsi cryptée permet la diffusion du disque compact optique, dont l'information elle-même n'est pas cryptée, et ainsi accessible par tout lecteur de CD-ROM, l'exploitation de l'information ne pouvant alors s'effectuer qu'au moyen d'une clé, elle-même par exemple constituée par un logiciel intégré dans le CD ROM placé sur la machine exploitant la ou les unités de lecture ou par un logiciel stocké dans ladite machine.

La manière de réalisation de l'invention et les avantages qui en découlent ressortiront mieux des exemples de réalisation qui suivent, donnés à titre indicatif et non limitatif, à l'appui de la figure unique annexée, représentant une installation d'archivage et d'interaction mettant en oeuvre les disques compacts optiques.

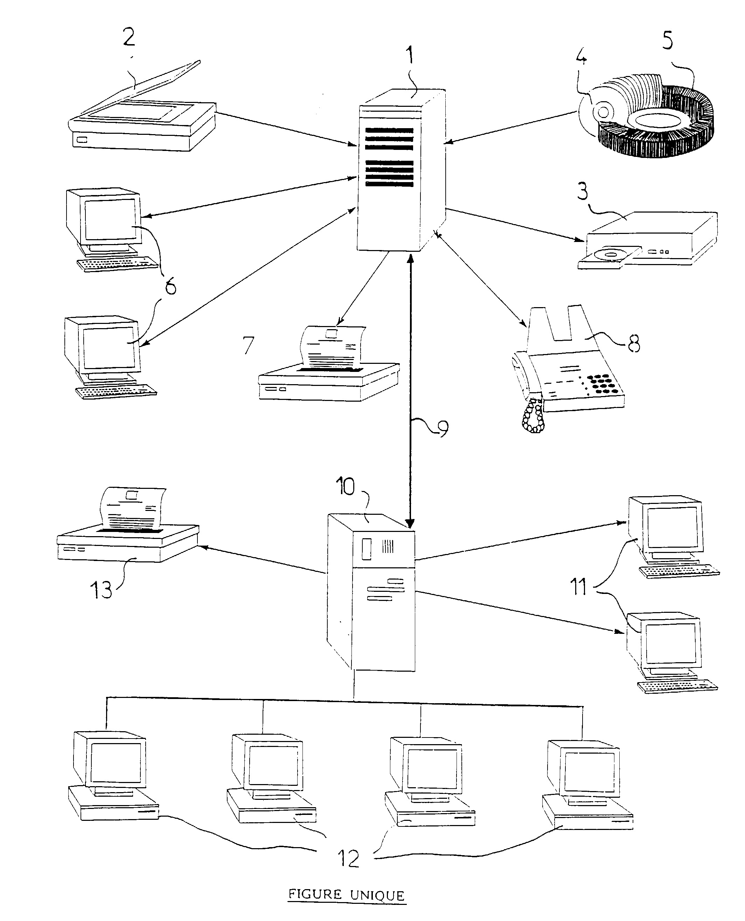

L'installation représentée sur la figure 1 est destinée à permettre la réalisation d'un archivage fonctionnant en mode interactif. Elle comprend tout d'abord un numériseur (2), destiné de manière connue, à numériser les signaux optiques et analogiques issus d'un support, se présentant par exemple sous la forme d'une feuille format A4, A3, etc..., pour les transmettre à une unité centrale constituée dans le cas d'espèce par un ordinateur (1). Avantageusement, le procédé de numérisation mis en oeuvre est optimisé de telle sorte à n'introduire qu'une seule fois un dossier déterminé, quel que soit le nombre de pages qui le constitue. Par ailleurs, chaque dossier est numérisé en automatique, c'est à dire que les pages sont lues par le numériseur une à une automatiquement, sans l'intervention d'une quelconque opératrice. Chaque dossier est référencé soit par un numéro d'identification, soit par un nombre, soit par un chapitre, soit encore par un code à barres. Le principe de numérisation de document peut donc être appliqué à tout type d'applicatif, le contenu des pages étant indifférent. Le logiciel de pilotage du numériseur inclut tous les paramètres utiles et nécessaires en fonction de la qualité des dossiers à numériser, et notamment de la résolution (200, 240, 300 dpi par exemple). Les informations ainsi numérisées sont tout d'abord stockées de manière compressée sur un disque magnétique intégré dans l'ordinateur (1).

Celui-ci intègre un algorithme de traitement destiné, en liaison avec un organe interactif (6), constitué d'un écran et d'un clavier, à transformer le numéro d'identification ainsi introduit par le clavier en un numero de fichier de stockage compatible avec la norme ISO 9660 NIVEAU 1. En d'autres termes, l'algorithme qu'intègre l'unité centrale (1) est destiné à transformer le numéro A du fichier primaire d'identification du document numérisé en un nouvel identifiant du fichier de stockage.

La norme ISO 9660 Niveau 1 stipule que le nom du fichier doit être de huit caractères avant le point, ces caractères étant susceptibles de se présenter sous forme alphanumérique : les 26 lettres de l'alphabet, les dix chiffres de zéro à neuf, le signe underscore ( _ ), soit 37 caractères représentant la base maximum de conversion du nombre A.

Elle stipule également que le nom du fichier comporte optionnellement de un à trois caractères après le point, qui sont utilisés dans les exemples décrits pour le stockage du numéro de page du document (chaque page du document peut générer un fichier).

Il est toutefois possible de récupérer ces trois caractères situés après le point pour compléter le nombre de caractères permettant d'exprimer le nom d'un fichier (soit 8+3=11). Dans ce cas un document sera constitué d'un seul fichier multi-pages. Ce choix est dicté par le réalisateur du CD-ROM en fonction du type de document à archiver et de la dimension de l'index primaire constitué par le nombre A.

Enfin, la norme ISO 9660 niveau 1 précise que le nombre de niveaux hiérarchiques des répertoires ne peut excéder le nombre 8. De par l'existence de cette norme, il existe de fait une uniformité dans le cadre de l'utilisation des disques optiques compacts, et partant de leur diffusion.

Il va être décrit à titre d'exemples le traitement auquel est soumis le numéro d'identification, c'est à dire le nom du fichier primaire introduit par l'archiveur au moyen d'un ensemble clavier-écran (6).

Dans un premier exemple, on suppose vouloir archiver le dépôt des comptes sociaux d'une entreprise, dont le numéro d'identification SIREN est le 324862614. Pour cette entreprise, on souhaite obtenir le bilan de Juin 1993.

Le fichier primaire portera, compte-tenu des conventions en vigueur au niveau des greffes des Tribunaux de Commerce, le numéro d'identification suivant : 93 06 324862614 dont la transformation en base 37 donne :
G F 4PCI7O.

Ce nombre est décomposé de la façon suivante :
93 est transformé en lettre G par l'algorithme suivant :
   - caractère ASCII représenté par la valeur décimale (93-22) ainsi 93 devient G.
06 est transformé en lettre F par l'algorithme suivant :
   - caractère ASCII représenté par la valeur décimale 06 incrémentée de 64.

Les valeurs 22 et 64 sont des conventions connues du programme de codification et du programme d'accès à l'information. Ces conventions ont été choisies par le réalisateur afin de commencer un archivage d'un bilan l'année 87 et de stocker 12 mois d'une année sous forme d'un seul caractère.

L'identifiant SIREN transformé par la base 37 devient 4PCI7O.

L'ensemble de ces trois éléments permet de constituer une chaîne alphanumérique de 8 caractères, GF4PCI7O, répondant bien à la norme ISO 9660 Niveau 1.

Ainsi le dispositif de numérisation (2) piloté par un utilisateur employant un dispositif interactif (6) génère autant de fichiers que de pages introduites dans le numériseur. Ces fichiers sont intitulés GF4FCI7O.XX, où XX correspond au numéro de page en cours de numérisation. Lesdits fichiers sont stockés dans un répertoire ou dans un sous-répertoire d'un disque magnétique de l'ordinateur (1).

Quand on a obtenu une quantité suffisante de documents numérisés pour permettre le gravage d'un CD-WORM, les données sont envoyées sur le dispositif (3), constitué par une station de gravage permettant d'encoder l'ensemble des documents numérisés sous la forme d'un CD-ROM de x répertoires et pouvant contenir jusqu'à 20 000 pages de documents numérisés.

La station de gravage (3) grave un CD-WORM (4), qui lorsqu'il est réalisé, est introduit dans un magasin de stockage ou juke-box (5), mettant ainsi à la disposition de l'ordinateur (1) les données précédemment numérisées et ainsi archivées, et permettant de procéder à la suppression des données préalablement stockées sur le disque magnétique.

L'unité centrale (1) permet aux utilisateurs connectés à un ordinateur distant (10) à travers un système de réseau (9) de consulter les documents numérisés dès la phase de numérisation effectuée, à partir du disque magnétique de l'ordinateur (1), avant que le gravage soit effectué, puis à partir du juke-box (5) connecté à l'ordinateur (1), après le gravage du CD-WORM. Les utilisateurs disposent donc continuellement des documents durant la phase de gravage du CD-WORM. Ces documents sont exploitables à partir d'un écran de visualisation (12) ou imprimable sur une imprimante (7 ou 13), voire transmissible par télécopie au moyen d'un dispositif approprié (8).

De même il est possible de produire plusieurs exemplaires dudit CD-WORM, permettant une exploitation en autonome sur un simple micro-ordinateur (PC) équipé d'un lecteur de CD-ROM, lequel PC sera équipé comme l'ordinateur (1) d'un logiciel contenant les algorithmes permettant de rechercher l'information.

Le fichier primaire portant le numéro d'identification 93 06 324862614 a donc été transformé en base 37 en G F 4PCI7O.

Si par ailleurs, on fixe comme détermination du nom de répertoire du disque optique compact à mémoire fixe (CD-ROM) dans lequel sera stocké ce fichier de stockage, le nombre constitué des deux derniers caractères du nombre A du fichier primaire, le document ainsi numérisé sera stocké dans le répertoire {14} dudit disque.

Ainsi qu'il sera décrit ci-après plus en détail, un utilisateur souhaite obtenir le bilan de juin 1993 de la société référencée par son numéro SIREN, et plus précisément la page 2 de ce bilan, il suffit qu'il introduise par le biais d'un organe interactif (6 ou 11 ou 12) également décrit après plus en détail, le simple numéro d'identification du fichier primaire 93 06 324862614.02, qui, par le biais de l'interactivité, reconnaît les deux derniers caractères avant le point et sait, compte tenu de la directive établie pour fixer le nom du répertoire, que ce document se situe dans le répertoire (14) du CD-ROM et qu'il ne convient plus que d'en extirper la deuxième page, l'identification du fichier de stockage devenant G F 4PCI7O.02.

| Tableau récapitulatif de l'exemple numéro 1: | | | | | | |
|---|---|---|---|---|---|---|
| Année | Mois | N° SIREN | N° page | Répert. | Nom fichier primaire | Nom fichier encodé |
| Min(19) 87 | 01 | 000000000 | 000 | 00 | AA 000000000 | AA000000.00 |
| | | | | | | |
| Max(20)24 | 12 | 999999999 | 999 | 99 | _L 999999999 | _LEFL670.999 |
| | | | | | | |
| EX: (19)93 | 06 | 324862614 | 002 | 14 | GF 324862614 | GF4PCI7O.002 |

Dans un autre exemple numéro 2, on souhaite procéder au codage du dépôt d'actes ou formalités par greffe et par année.

| N° Gestion | Type doc | quantième Jour Dépôt | N° page | Répert. primaire | Nom fichier encodé | Nom Fichier |
|---|---|---|---|---|---|---|
| MIN 54A00001 | 000 | 000 | 001 | A01 | 0000154000000 | 286AW6.001 |
| MAX 99Z34149 | 999 | 366 | 999 | Z49 | 341499999366 | Z_09PB46.999 |
| | | | | | | |
| EX: 93B02650 | 164 | 312 | 003 | B50 | 0265093164312 | 2TBWBM5K.003 |

Ce deuxième exemple montre la possibilité de stocker de l'information alphabétique provenant du fichier primaire dans le nom du répertoire où sera stocké le fichier. Cette possibilité peut être utilisée à concurrence de 8 caractères par niveau de répertoire. Il est ainsi possible en utilisant les 8 niveaux de sous-répertoires ISO 9660 de stocker un identifiant alphanumérique provenant du fichier primaire jusqu'à 8 x 8 = 64 caractères.

Dans la mesure du possible, le réalisateur du CD-ROM n'utilise les niveaux supplémentaires que si le nom du fichier primaire le justifie pour éviter une dégradation des performances lors de la relecture.

Dans l'exemple numéro 1, l'identifiant unique de l'entreprise est le numéro SIREN attribué par l'INSEE au niveau du territoire français.

Dans l'exemple numéro 2, l'identifiant unique de l'entreprise est un numéro de gestion créé par le greffe en usage interne. Ce numéro de gestion couvre le territoire du greffe. Chaque greffe possédant son système d'archivage, il n'y a pas de risques de mélange entre les greffes.

D'une façon générale, le nom du fichier primaire doit provenir d'un identifiant unique de la chaîne de traitement de caractères à archiver. On choisira judicieusement soit un numéro de facture, numéro de bon de livraison, numéro chronologique courrier, numéro ISBN (numéro de dépôt légal) numéro de dossier, code client, code fournisseur, numéro d'interchange, etc...

De fait, avant compression de l'information au niveau de l'unité centrale (1), on prélève un certain nombre d'octets qui vont déterminer le répertoire au niveau duquel sera stockée cette information. De manière connue, la distribution des fichiers au sein des répertoires s'effectue de manière aléatoire. Par ailleurs, on limite le nombre de fichiers par répertoire, ce nombre étant typiquement de 256. Par ailleurs, le nombre de pages actuellement stockables sur un CD-ROM est voisin de vingt mille. Afin de réduire au maximum la durée d'interaction et notamment de recherche d'un fichier, il convient également de ne pas augmenter à l'infini le nombre de répertoires dans un disque, de sorte que ce nombre est généralement limité à une centaine. Ainsi, le nombre d'octets prélevés sur l'information à stocker est-il dépendant de l'importance relative du nombre de fichiers à stocker sur un CD-ROM.

Concernant le choix du nombre de caractères prélevés dans le nom du fichier primaire A, il doit permettre de ne pas dépasser 256 fichiers par répertoire pour améliorer les performances de lecture. Ce nombre peut être dépassé exceptionnellement.

Dans l'exemple n° 1 concernant l'archivage de bilans, la distribution des répertoires s'effectue selon les deux derniers chiffres du numéro SIREN, soit un potentiel de répertoires pouvant aller de 00 à 99, c'est à dire 100 répertoires. Sur un CD-ROM de 74 minutes qui peut contenir 650 millions d'octets, il est possible de stocker 20 000 images compressées groupe (recommandation CCITT), faisant en moyenne 32,5 kilooctets par image. La distribution des nombres se faisant aléatoirement sur les chiffres des dizaines et des unités, on peut compter sur une bonne répartition des dossiers sur les 100 répertoires soit une moyenne de 200 dossiers par répertoire.

D'une façon générale, 100 répertoires sur un CD-ROM suffisent à stocker les 20 000 fichiers images. Dans le cadre de l'archivage de documents bureautiques contenant du texte ASCII ou encodé, la taille du fichier de chaque document se situe généralement aux alentours des 4 kilo octets.
650 000 000 : 4 000 = 162 500 fichiers sont potentiellement archivables sur le CD-ROM. Si l'on veut respecter les 200 fichiers par répertoire, il faut 813 répertoires sur le disque qui, compte tenu du nombre de fichiers par répertoire, entraînent une arborescence à 2 niveaux de répertoires à 2 caractères par exemple. C'est donc au réalisateur du CD-ROM d'utiliser au mieux le principe général décrit ci-dessus.

Comme déjà dit, les disques CD-ROM (4) ainsi gravés sont stockés dans un ou plusieurs magasins de stockage (juke-box) (5), reliés par l'intermédiaire d'un pilote (driver) spécifique à l'unité centrale (1). Auxdits magasins (5) sont associés des lecteurs de CD-ROM, le positionnement d'un disque spécifique, sur lequel est stockée une information recherchée s'effectuant automatiquement au moyen d'une base de données intégrée dans l'unité centrale (1). Ainsi, de par cette base de données, et de par le mode de stockage des informations sur des répertoires déterminés, lesdites informations stockées sur un CD-ROM spécifique sont accessibles très rapidement par exemple sous la forme de fichiers groupe III ou groupe IV, et donc susceptibles d'être transmis à l'utilisateur par télécopie (8).

Associée à l'unité centrale (1), on trouve avantageusement une imprimante (7) susceptible de permettre l'impression papier des informations stockées sur le disque à la demande de l'utilisateur.

En outre, le système d'archivage ainsi constitué est, comme déjà dit, susceptible d'une interconnexion réseau (9) avec une autre unité centrale (10), sur laquelle sont reliés des utilisateurs munis d'un terminal (11) ou (12) pour aboutir au niveau desdits utilisateurs à la visualisation ou l'impression par le biais d'une imprimante (13) de documents stockés sur les disques (4).

Cette interconnexion au réseau s'effectue par tout type de réseaux locaux du marché (Ethernet, Token ring), sous les protocoles Decnet, TCP, NOVELL... Eventuellement, les réseaux locaux peuvent être déportés sur un site distant à travers le réseau Transfix, voir le réseau Transpac. Cette interconnexion est donc susceptible d'être totalement intégrée dans les divers systèmes informatiques actuellement existants.

Les disques compacts ainsi gravés peuvent être produits autant de fois que nécessaire. L'unicité de la source d'archivage n'est donc plus de règle et en cas de destruction, l'information peut être ainsi sauvegardée.

Fondamentalement, le procédé ainsi décrit présente l'avantage d'unifier la méthode de définition des répertoires et des noms des fichiers utilisés pour stocker l'information.

Compte-tenu du sytème d'indexation retenu, il n'est pas nécessaire, lorsque l'information est contenue sur plusieurs disques compacts, de fournir à chaque nouveau disque un nouvel index général des documents qu'il stocke. Il suffit de disposer du premier disque compact muni de son programme de consultation contenant l'algorithme pour permettre de retrouver l'information, y compris avec les autres disques.

Dans une version évoluée de l'invention, on crypte l'accès à l'information. Les images numérisées sont compressées selon une recommandation CCITT groupe IV. De nombreux prestataires de services et de nombreux matériels reconnaissent automatiquement ce format en vue de l'exploiter. L'information dans ce format est déjà compressée. Toute modification entraînerait l'impossibilité d'utiliser le fichier avec un matériel standard. C'est la raison pour laquelle on préfère crypter le chemin d'accès au document que le document lui-même. Ainsi dans l'exemple N° 1, le cryptage de l'accès à l'information donnerait le résultat suivant :

| Tableau initial de l'exemple 1 : | | | | | |
|---|---|---|---|---|---|
| Année | Mois | N° SIREN | N° de page | Répert. | Nom fichier encodé |
| Min(19) 87 | 01 | 000000000 | 001 | 00 | AA000000.00 |
| | | | | | |
| Max(20)24 | 12 | 999999999 | 999 | 99 | _LEFL670.999 |
| | | | | | |
| EX: (19)93 | 06 | 324862614 | 002 | 14 | GF4PCI7O.002 |

La colonne répertoire après cryptage serait :

| Répert. | Nouveau |
|---|---|
| 00 | 100-000 = 100 |
| 99 | 100-99 = 001 |
| 14 | 100-14 = 086 |

La non connaissance du repertoire dans lequel se trouve le fichier, obligerait, dans le cas de l'utilisation illicite du CD-ROM, à balayer l'intégralité des répertoires pour retrouver le fichier. Compte tenu du temps d'accès du média CD-ROM, cette opération ne serait pas compatible avec une interactivité normale. L'opération de décryptage peut être rendue extrêmement complexe en créant un ou plusieurs niveaux de répertoire supplémentaires et/ou en prélevant plus de chiffres dans le fichier primaire A. D'une autre façon, il est possible de crypter la deuxième partie du nom du fichier du document représentant la séquence de l'information dans le document, et notamment le numéro de page.
Exemple non limitatif du cryptage du nombre de pages.

| Nb pages Initial | Nb Pages après cryptage | Nom du fichier primaire après cryptage |
|---|---|---|
| MIN 001 | 1000-001=999 R0 | 286AW6.R0 |
| MAX 999 | 1000-999=001 1 | Z_09PB46.1 |
| | | |
| EX: 003 | 1000-003=997 QZ | 2TBWBM5K.QZ |

R0 et QZ représentant la seconde partie cryptée du nom du fichier représentant le numéro de page.

Le procédé conforme à l'invention présente de nombreux avantages par rapport aux procédés de stockage et d'archivage connus à ce jour. Outre l'interchangeabilité du matériel nécessaire à l'interactivité de l'archivage, rendue notamment possible par la conformité de l'organisation des CD-ROM à la norme ISO 9660, on peut principalement souligner la rapidité de l'accès à l'information recherchée, compte tenu du système d'organisation de stockage des données au sein des CD-ROM.

Par ailleurs, la répartition des fichiers distribués équitablement en fonction des octets prélevés dans le nom du fichier permet un bon équilibrage des répertoires. Ainsi, en ne dépassant pas 256 fichiers par répertoire, on obtient un excellent temps d'accès au fichier recherché.

Le document stocké conserve son format d'origine, permettant de stocker n'importe quel type d'informations (données numérisées, ASCII, traitement de texte, traitement CAO, images compressées groupe IV, conteneur de fichiers, fichiers d'impression, spoules d'édition, fichiers d'interchange). Ce procédé est donc généralisable à tout type de document susceptible d'être stockés sur CD-ROM.

## Revendications

1. Procédé de stockage et de classement de données sur un disque optique compact à mémoire fixe (CD-WORM) (4), dans lequel lesdites données sont stockées par gravage des disques optiques, *caractérisé* en ce qu'il consiste :
- tout d'abord à identifier sous la forme d'un nombre A, le fichier primaire correspondant à une donnée ou à une série de données à stocker, ledit nombre A étant susceptible de représenter plusieurs informations relatives à la même donnée ou à la même série de données ;
- puis à identifier sous la forme d'un nombre B d'au plus trois caractères, le fichier dans lequel se trouve l'information recherchée ou à stocker ;
- puis à soumettre ledit nombre A d'identification du fichier primaire à un changement de base, de telle sorte à obtenir un nombre correspondant au fichier de stockage constitué par un code comprenant :
- une première partie identifiant la donnée ou la série de donnée sous la forme d'un mot de huit caractères alphanumériques ;
- une seconde partie d'au plus trois caractères numériques, séparée de la première par un point ou équivalent, représentative d'une séquence d'informations dans la donnée ou la série de données,
Le nom du répertoire du disque compact dans lequel est stocké ledit fichier de stockage étant composé de un à huit caractères alphanumériques sélectionnés dans le nombre A d'identification du fichier primaire ou dans le nombre représentatif du fichier de stockage, selon une position fixe et prédéterminée au sein dudit nombre, le nombre desdits caractères étant prédéterminé pour un type de stockage et de classement.

2. Procédé de stockage et de classement de données sur un disque optique compact à mémoire fixe (CD-WORM) (4) selon la revendication 1, *caractérisé* en ce que le changement de base s'effectue de la base décimale en base supérieure à 10 pouvant aller jusqu'à 37.

3. Procédé de stockage et de classement de données sur un disque optique compact à mémoire fixe (CD-WORM) (4) selon l'une des revendications 1 et 2, *caractérisé* en ce que la seconde partie du fichier de stockage n'est pas codée et correspond au nombre B.

4. Procédé de stockage et de classement de données sur un disque optique compact à mémoire fixe (CD-WORM) (4) selon l'une des revendications 1 et 2, *caractérisé* en ce qu'il comporte, en outre, une étape supplémentaire de cryptage associée à l'étape de changement de base, les caractères constitutifs du nom du répertoire étant alors choisis au niveau d'un numéro de fichier obtenu après cryptage, ledit cryptage s'effectuant au moyen d'un algorithme, de telle sorte à aboutir au cryptage de l'accès aux données stockées.

5. Procédé de stockage et de classement de données sur un disque optique compact à mémoire fixe (CD-WORM) (4) selon la revendication 4, *caractérisé* en ce que seule la première partie du code constitutif du fichier de stockage est cryptée.

6. Procédé de stockage et de classement de données sur un disque optique compact à mémoire fixe (CD-WORM) (4) selon la revendication 4, *caractérisé* en ce que la totalité du code constitutif du fichier de stockage est cryptée.

7. Procédé de stockage et de classement de données sur un disque optique compact à mémoire fixe (CD-WORM) (4) selon l'une des revendications 1 à 6, *caractérisé* en ce que les données stockées conservent leur format d'origine, et sont constituées :
- soit de données numérisées ;
- soit de données en provenance de fichiers traitement de texte ou de traitement CAO (Conception Assistée par Ordinateur) ;
- soit de données en provenance de spoules d'édition ;
- soit de données en provenance de fichiers d'interchange.
